# EUROPEAN PATENT SPECIFICATION

(11) **EP 1 369 791 B1**
(45) Date of publication and mention of the grant of the patent: **19.03.2008**
(21) Application number: 03000118.4
(22) Date of filing: 02.01.2003
(51) Int. Cl.: G06F 17/30

(54) **Portable terminal supporting apparatus, data synchronizing method, and portable terminal apparatus**
Vorrichtung zum Unterstützen von tragbaren Endgeräten, Verfahren zur Datensynchronisation, und tragbares Endgerät
Appareil pour le soutien de terminaux portables, procédé de synchronization de données, et appareil terminal portable

(30) Priority: 05.06.2002 JP 2002164903
(43) Date of publication of application: 10.12.2003
(73) Proprietor: FUJITSU LIMITED, Kawasaki-shi, Kanagawa 211-8588 (JP)
(72) Inventor: Watanabe, Hideaki, c/o Fujitsu Limited, Kawasaki-shi, Kanagawa 211-8588 (JP)
(74) Representative: Körfer, Thomas

(56) References cited:
- EP-A- 1 058 196
- US-A- 5 640 002
- US-A- 5 692 199
- US-A1- 2001 055 978
- US-A1- 2002 032 042

## Description

### BACKGROUND OF THE INVENTION

### 1) Field of the Invention

This invention relates to a potable terminal supporting apparatus which supplies power to at least a potable terminal apparatus, a portable terminal apparatus, and a data synchronization method.

### 2) Description of the Related Art

In recent years, as PDAs (Personal Digital Assistants) have spread and the functions of cellular phones have advanced, it has become important to accomplish data synchronism between one portable terminal apparatus and a computer. Data synchronism means that a portable terminal apparatus and a computer exchange data therebetween and the consistency of information which is held by both the portable terminal apparatus and the computer is thereby maintained.

Patent publication US 2001/0055978 discloses a portable data device which can be connected to a cradle to recharge the device power supply and/or to upload or download information to and from the portable data device.

Data on an address book or a schedule of a PIM (Personal Information Manager), for example, is required by both the portable terminal apparatus and the computer, and it is important to synchronize data between these apparatuses.

These pieces of data are synchronized with each other by connecting the portable terminal apparatus to the computer by a wire or wireless communication and holding data communication therebetween. The wire connection involves, for example, serial connection such as RS-232C or USB and TCP/IP using the Ethernet(R). The wireless connection involves, for example, IrDA, Bluetooth and wireless LAN.

Further, data synchronism is accomplished by temporarily copying data stored in the portable terminal apparatus to a memory card and fetching the data by the computer. Conversely, data synchronism is accomplished by temporarily copying the data stored in the computer to a memory card and fetching the data by the portable terminal apparatus.

However, there is a problem that an inconsistent state in which such data synchronism is not sufficiently accomplished and data updated in one apparatus is not sufficiently reflected in the other apparatus, frequently occurs.

A cause for the occurrence of this problem is as follows . To accomplish data synchronism, it is necessary that both the computer and the portable terminal apparatus can hold data communication while they operate, that data synchronism software run on both the computer and the portable terminal apparatus, and that both are set so that a user starts data synchronism or so that data synchronism is regularly accomplished. However, it rarely occurs that all of these conditions are satisfied when data is updated.

As a result, the frequency of data synchronism decreases, that of data synchronous processing cannot follow up that of data update and data inconsistency occurs between the computer and the portable terminal apparatus.

It is possible to provide a server on a network and to synchronize data between the computer and the portable terminal apparatus through this server. Again, this method has the following problems . Since it is necessary to connect the portable terminal apparatus to the network, it takes time and labor to do so and the frequency of utilization decreases. Furthermore, if communication is set to be held any time, power consumption increases accordingly, and it is substantially difficult to automatically realize data synchronism in this state. In addition, it requires cost to install and operate the server for data synchronism.

### SUMMARY OF THE INVENTION

It is an object of this invention to provide a portable terminal supporting apparatus, a data synchronization method and a portable terminal apparatus that can increase the frequency of data synchronism by enabling data synchronism by simple operation and that can enhance the consistency of synchronization target data.

According to the apparatus and method of one aspect of the present invention, when a portable terminal supporting apparatus is electrically connected to the portable terminal apparatus, down data that is data to be passed from the computer to the portable terminal apparatus is transferred to the portable terminal apparatus, and up data that is data to be passed from the portable terminal apparatus to the computer is received from the portable terminal apparatus. Thus, data synchronization can be achieved between the portable terminal apparatus and the PC.

According to the apparatus and method of another aspect of the present invention, when a portable terminal supporting apparatus is electrically connected to the portable terminal apparatus, down data that is data to be passed from some other portable terminal apparatus to this (electrically connected one) portable terminal apparatus is transferred to the portable terminal apparatus, and up data that is data to be passed from this portable terminal apparatus to the other portable terminal apparatus is received from the portable terminal apparatus.

The computer programs according to still another aspect of the present invention realize the methods according to the present invention on a computer.

These and other objects, features and advantages of the present invention are specifically set forth in or will become apparent from the following detailed descriptions of the invention when read in conjunction with the accompanying drawings.

The object of the invention is achieved with the features of the claims.

### BRIEF DESCRIPTION OF THE DRAWINGS

Fig. 1 is a block diagram which shows the system configuration of a data synchronization system according to a first embodiment of the present invention,
Fig. 2 shows one example of a synchronous state storage section,
Fig. 3A and Fig. 3B are explanatory views that explain data synchronization from a PDA to a PC according to the first embodiment,
Fig. 4A and Fig. 4B are explanatory views that explain data synchronization from the PC to the PDA according to the first embodiment,
Fig. 5 is a flowchart of the operation of a data synchronization processor of the PDA according to the first embodiment,
Fig. 6 is a flowchart of the operation of a data synchronization processor of the PC according to the first embodiment,
Fig. 7 is a block diagram which shows the system configuration of a data synchronization system according to a second embodiment of the present invention,
Fig. 8 shows one example of a master data synchronous state storage section, and
Fig. 9 is a flowchart of the operation of a data synchronization processor of a PDA according to the second embodiment.

### DETAILED DESCRIPTIONS

Embodiments of the portable terminal supporting apparatus, the data synchronization method, and the portable terminal apparatus according to the present invention will be explained hereinafter in detail with reference to the accompanying drawings.

In a first embodiment, a data synchronization system which accomplishes data synchronism between the portable terminal apparatus according to the present invention and a personal computer (PC) will be explained. In a second embodiment, a data synchronization system which accomplishes data synchronism between a plurality of portable terminal apparatuses according to the present invention will be explained.

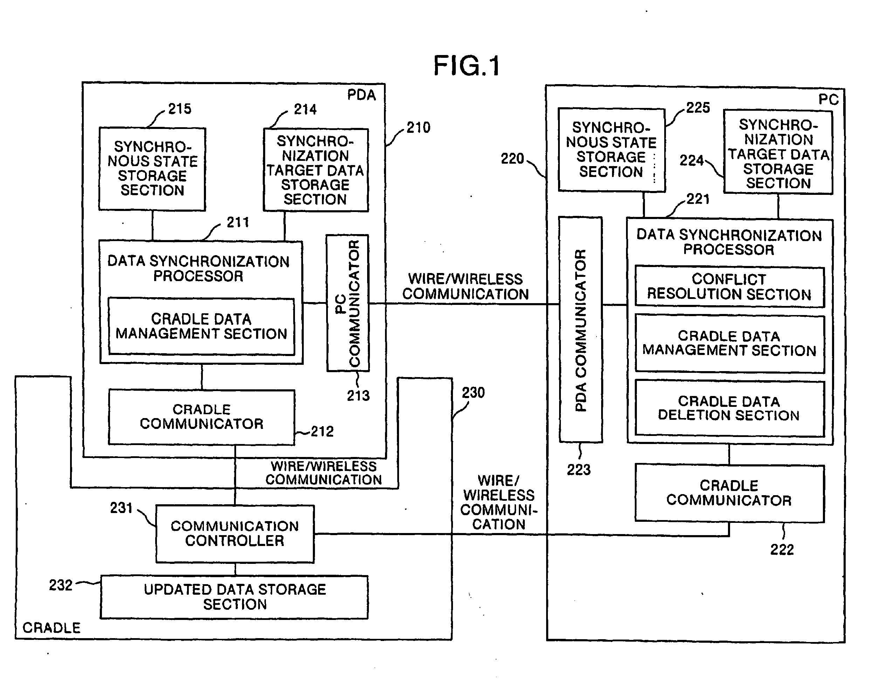

Fig. 1 is a block diagram which shows the system configuration of the data synchronization system according to the first embodiment. As shown in this figure, this data synchronization system consists of a PDA 210, a PC 220 and a cradle 230.

The PDA 210 is a portable terminal apparatus which needs to accomplish data synchronism with the PC 220. The PDA 210 includes a data synchronization processor.211, a cradle communicator 212, a PC communicator 213, a synchronization target data storage section 214, and a synchronous state storage section 215.

The data synchronization processor 211 is a processor which accomplishes data synchronism with the PC 220. If communication is possible with the PC 220, this data synchronization processor 211 directly communicates with the PC 220 to accomplish data synchronism. If communication is not possible with the PC 220, this data synchronization processor 211 transmits synchronization target data updated by the PDA 210 to the cradle 230 through the cradle communicator 212, receives synchronization target data updated by the PC 220 from the cradle 230 and updates the corresponding synchronization target data in the PDA 210. In addition, this data synchronization processor 211 manages the synchronous states of synchronization target data including those of the updated data in the cradle 230 using the synchronous state storage section 215.

The cradle communicator 212 is a processor which transmits and receives updated data to and from the cradle 230 in response to a request from the data synchronization processor 211. The PC communicator 213 is a processor which communicates with the PC 220 for data synchronism, and the synchronization target data storage section 214 is a storage section which stores synchronization target data.

The synchronous state storage section 215 is a storage section which stores the synchronous states of synchronization target data. The synchronous states include "updated", "unprocessed", "completed" and "conflicting" states. If synchronization target data is updated by the PDA 210, this synchronization target data is newly registered in the synchronous state storage section 215 in a synchronous state of "updated". If this synchronization target data is transmitted to the cradle 230, the synchronous state thereof is changed from "updated" to "unprocessed".

If synchronization target data is updated by the PC 220, the updated data is fetched by the PDA 210 through the cradle 230 and if the synchronization target data in the PDA 210 is updated, this synchronization target data is newly registered in the synchronous state storage section 215 in a synchronous state of "completed". If the synchronization target data is updated by the PC 220, the updated data is fetched by the PDA 210 through the cradle 230 and the PDA 210 separately updates this synchronization target data to cause a data conflict, then the synchronous state of this synchronization target data is changed from the "updated" to "conflicting".

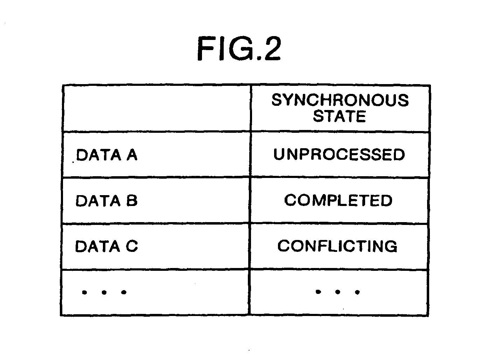

Fig. 2 shows one example of the synchronous state storage section 215. The figure shows that data A, which is synchronization target data, is updated by the PDA 210 and transmitted to the cradle 230, i.e., the data A is in an "unprocessed" state, that data B, which is synchronization target data, is updated by the PC 220 and fetched by the PDA 210 through the cradle 230, i.e., the data B in the PDA 210 is in an updated, "completed" state.

The figure also shows that data C, which is synchronization target data, is updated by the PC 220 and fetched by the PDA 210 through the cradle 230, the data C is separately updated by the. PDA 210 and a data conflict occurs, i.e., the data C is in a "conflicting" state.

The PC 220 is an apparatus which requires to accomplish data synchronism with the PDA 210, and functions as a master apparatus which resolves a data conflict if synchronization target data in the PC 220 conflicts with that in the PDA 210. This PC 220 includes a data synchronization processor 221, a cradle communicator 222, a PDA communicator 223, a synchronization target data storage section 224, and a synchronous state storage section 225.

The data synchronization processor 221 is a processor which accomplishes data synchronism with the PDA 210. If communication is possible with the PDA 210, this data synchronization processor 221 directly communicates with the PDA 210 to accomplish data synchronism. If communication is not possible with the PDA 210, this data synchronization processor 221 transmits synchronization target data updated by the PC 220 to the cradle 230 through the cradle communicator 222, receives synchronization target data updated by the PDA 210 from the cradle 230 and updates the corresponding synchronization target data in the PC 220. In addition, this data synchronization processor 221 manages the synchronous states of synchronization target data including those of the updated data in the cradle 230 using the synchronous state storage section 225.

If communication is possible with the PDA 210, this data synchronization processor 221 directly accomplishes data synchronism with the PDA 210, and then deletes the updated data which is completed with data synchronism and is stored in the cradle 230. The data synchronization processor 221 requests a user to designate a resolution method for the data for which a conflict occurs and resolves the conflict based on the method designated by the user.

The cradle communicator 222 is a processor which transmits and receives updated data to and from the cradle 230 in response to a request from the data synchronization processor 221. The PDA communicator 223 is a processor which communicates with the PDA 210 for data synchronism, and the synchronization target data storage section 224 is a storage section which stores synchronization target data.

The synchronous state storage section 225 is a storage section which stores the synchronous states of synchronization target data, and is used by the data synchronization processor 221. This synchronous state storage section 225 stores the same data as that of the synchronous state storage section 214 of the PDA 210 except that the PDA 210 is replaced by the PC 220. That is, if the synchronization target data is updated by the PC 220, the synchronization target data is newly registered in the synchronous state storage section 225 in a synchronous state of "updated". If this synchronization target data is transmitted to the cradle 230, the synchronous state of this synchronization target data is changed from "updated" to "unprocessed".

If the synchronization target data is updated by the PDA 210 and fetched by the PC 220 through the cradle 230 and the synchronization target data in the PC 220 is updated, then this synchronization target data is newly registered in the synchronous state storage section 225 in a synchronous state of "completed". If the synchronization target data is updated by the PDA 210 and fetched by the PC 220 through the cradle 230 and the synchronization target data in the PC 220 is separately updated to cause a data conflict, then the synchronous state of this synchronization target data is changed from "updated" to "conflicting".

The cradle 230, which is an apparatus which mediates data synchronism between the PDA 210 and the PC 220, includes a communication controller 231 and an updated data storage section 232. The communication controller 231 is a processor which transmits and receives updated data stored in the updated data storage section 232 to and from the PDA 210 and the PC 220.

The updated data storage section 232 is a storage section which stores updated data of the synchronization target data in the PDA 210 and the PC 220. The updated data storage section 232 stores the synchronization target data updated by the PDA 210 or the PC 220 together with information such as the name of the data and update time thereof.

Even if the PDA 210 and the PC 220 cannot directly communicate with each other, the PDA 210 or the PC 220 can transmit the updated data to this cradle 230, receive the updated data from this cradle 230 when the counterpart apparatus becomes operable and update its own synchronization target data by using this cradle 230. Therefore, both the PDA 210 and the PC 220 can increase the frequency of data synchronism.

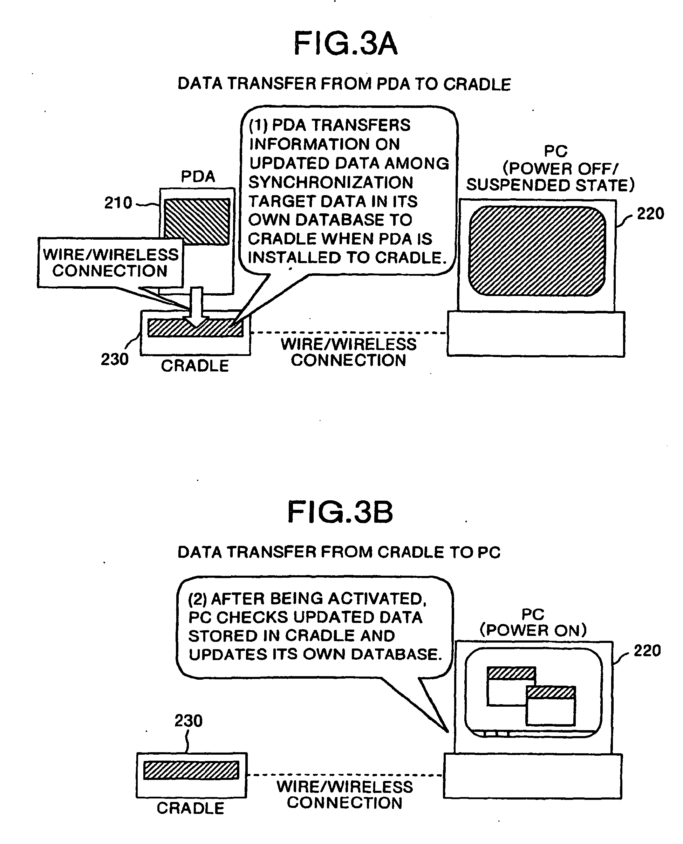

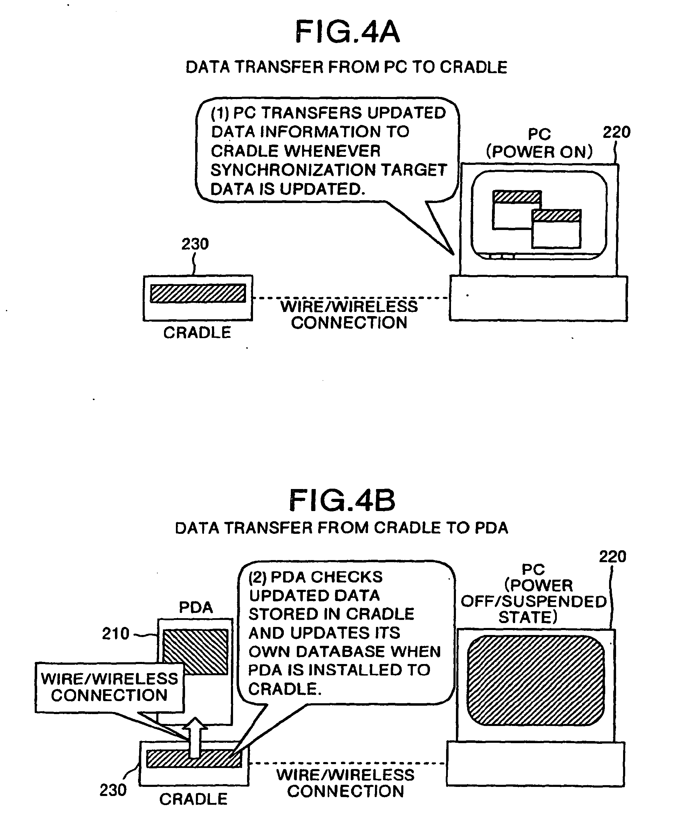

The data synchronism between the PDA 210 and the PC 220 using this cradle 230 will now be explained with reference to Figs. 3A, 3B, 4A, and 4B. Figs. 3A and 3B are explanatory views that explain the data synchronization from the PDA 210 to the PC 220 according to the first embodiment. Figs. 4A and 4B are explanatory views that explain the data synchronization from the PC 220 to the PDA 210 according to the first embodiment.

In Figs. 3A, 3B, 4A, and 4B, the PDA 210 and the cradle 230 are connected to each other by a wire or wireless communication. If the PDA 210 is installed to or provided near the cradle 230 while the PDA 210 is active, data can be transmitted and received between the PDA 210 and the cradle 230.

If the PC 220 and the cradle 230 are connected to each other by a wire or wireless communication, the cradle 230 is provided near the PC 220, and if the PC 220 is active, then data can be always transmitted and received between the PC 220 and the cradle 230.

As shown in Fig. 3A, if the PC 220 is stopped or suspended and the PDA 210, which is active, is installed to the cradle 230, synchronization target data updated by the PDA 210 is transferred to the cradle 230. As shown in Fig. 3B, if the PC 220 turns active, the updated data stored in the cradle 230 is transmitted to the PC 220.

As can be seen, by frequently performing the simple operation of installing the PDA 210 in an active state to the cradle 230, it is possible to store the updated data in the PDA 210, which is changed when a user goes outside or the like, in the cradle 230 without activating the PC 220. If the PC 220 is activated to be used, the updated data stored in the cradle 230 is automatically reflected in the corresponding synchronization target data in the PC 220, making it possible to increase the frequency of data synchronism.

As shown in Fig. 4A, whenever synchronization target data is updated in the PC 220, the updated synchronization target data is transferred to the cradle 230. As shown in Fig. 4B, the PDA 210 receives the updated data stored in the cradle 230 when the PDA 210 is installed to the cradle 230, thereby updating the corresponding synchronization target.

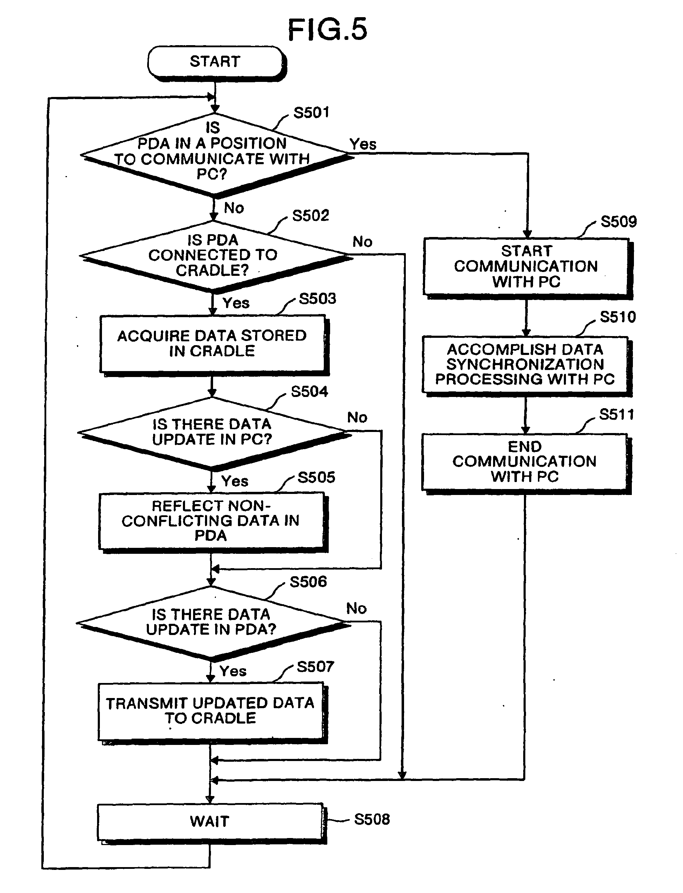

Processing procedures for the data synchronization processor 211 of the PDA 210 according to the first embodiment will next be explained. Fig. 5 is a flowchart which shows processing procedures for the data synchronization processor 211 of the PDA 210 according to the first embodiment. It is noted that this data synchronization processor 211 is activated if the PDA 210 is installed to the cradle 230 and also regularly activated at certain time intervals.

As shown in the figure, this data synchronization processor 211 of the PDA 210 determines whether the PDA 210 is in a position to communicate with the PC 220 with which it is necessary to accomplish data synchronism (at step S501) If the communication is not possible, it is determined whether the PDA 210 is connected to the cradle 230 (at step S502).

If the PDA 210 is connected to the cradle 230, the data synchronization processor 211 acquires data stored in the cradle 230 (at step S503) and determines whether there is data update in the PC 220 (at step S504).

If there is data update in the PC 220, the data synchronization processor 211 refers to the synchronous state storage section 215 and determines whether the same synchronization target data is separately updated by the PDA 210, i.e., whether a data conflict occurs. If a data conflict occurs, the data synchronization processor 211 changes the synchronous state of this synchronization target data from "updated" to "conflicting". If no data conflict occurs, the data synchronization processor 211 updates the synchronization target data in the PDA 210 to the updated data acquired from the cradle 230 (at step S505) and newly registers this synchronization target data in the synchronous state storage section 215 in a synchronous state of "completed".

The data synchronization processor 211 refers to the synchronous state storage section 215 and determines whether there is synchronization target data, the updated data of which needs to be reflected in the PC 220, i.e., whether there is synchronization target data in a synchronous state of "updated" (at step S506). If there is synchronization target data, the updated data of which needs to be reflected the data synchronization processor 211 transmits the updated data of to the cradle 230 (at step S507) and changes the synchronous state of the data from "updated" to "unprocessed" . If there is no synchronization target data, the updated data of which needs to be reflected in the PC 220, and if the synchronization target data, the updated data of which needs to be reflected in the PC 220 has been processed, the data synchronization processor 211 waits for the next activation (at step S508).

On the other hand, if the PDA 210 is not connected to the cradle 230 ("No" at step S502), the data synchronization processor 211 waits for the next activation without doing anything (at the step S508). If communication is possible with the PC 220 ("Yes" at step S501), then the data synchronization processor 211 starts communicating with the PC 220 (at step S509) , directly accomplishes data synchronism with the PC 220 (at step S510), ends communicating with the PC 220 (at step S511) and waits for the next activation (at step S508).

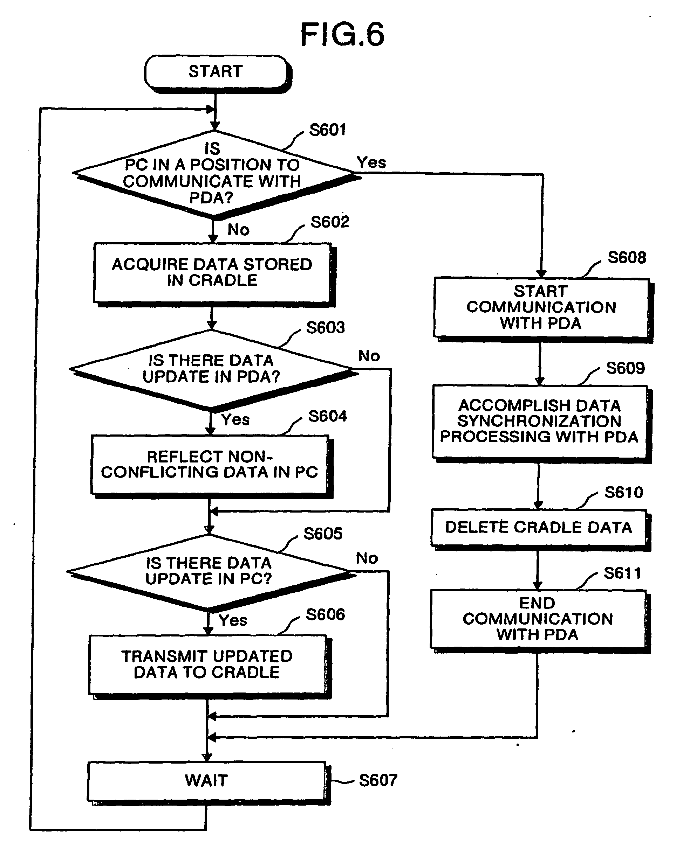

Processing procedures for the data synchronization processor 221 of the PC 220 according to the first embodiment will next be explained. Fig. 6 is a flowchart which shows processing procedures for the data synchronization processor 221 of the PC 220 according to the first embodiment. It is noted that this data synchronization processor 221 is activated if synchronization target data is updated and also regularly activated at certain time intervals.

As shown in the figure, this data synchronization processor 221 of the PC 220 determines whether communication is possible with the PC 220 (at step 5601 ) . If communication is not possible, the data synchronization processor 221 acquires data stored in the cradle 230 (at step S602) and determines whether there is data update in the PDA 210 (at step S603).

If there is data update in the PDA 210, the data synchronization processor 221 refers to the synchronous state storage section 225 and determines whether the same synchronization target data is separately updated by the PC 220, i.e., whether a data conflict occurs. If a data conflict occurs, the data synchronization processor 221 changes the synchronous state of this synchronization target data from "updated" to "conflicting". If no data conflict occurs, the data synchronization processor 221 updates the synchronization target data in the PC 220 to the data acquired from the cradle 230 (at step S604) and newly registers this synchronization target data in the synchronous state storage section 225 in a synchronous state of "completed".

The data synchronization processor 221 refers to the synchronous state storage section 225 and determines whether there is synchronization target data, the updated data of which needs to be reflected, in the PDA 210, i.e., whether there is synchronization target data in a synchronous state of "updated" (at step S605). If there is synchronization target data, the updated data of which needs to be reflected, the data synchronization processor 221 transmits the updated data to the cradle 230 (at step S606) and changes the synchronous state of the data from the "updated" to "unprocessed". If there is no synchronization target data, the updated data of which needs to be reflected in the PDA 210, and if the synchronization target data, the updated data of which needs to be reflected has been processed, the data synchronization processor 221 waits for the next activation (at step 5607).

On the other hand, if communication is possible with the PDA 210 ("Yes" at step 5601), the data synchronization processor 221 starts communicating with the PDA 210 (at step S608) and directly accomplishes data synchronism with the PDA 210 (at step S609). During the data synchronization processing which is performed with the PDA 210, the synchronous state storage sections 215 and 225 are initialized. In addition, if there are conflicting data, the data synchronization processor 221 inquires the user about this data and resolves the data conflict. Further, the data synchronization processor 221 deletes the data in the cradle 230 (at step S610), ends communicating with the PDA 210 (at step S611) and waits for the next activation (at the step S607).

As explained so far, in the first embodiment, if the PDA 210 and the PC 220 which need to accomplish data synchronism cannot communicate with each other, the PDA 210 or the PC 220 transmits updated data to the cradle 230, receives this updated data when the counterpart apparatus can be connected to the cradle 230, and updates the synchronization target data. Therefore, even if there is a little occasion that the PDA 210 and the PC 220 is in a position to communicate with each other, it is possible to frequently accomplish data synchronism and to enhance the consistency of the synchronization target data.

If the synchronization target data which is updated by the PDA 210 or the PC 220 is updated again after being transmitted to the cradle 230 and before the counterpart apparatus receives the updated data, it is possible to always store the latest updated data in the cradle 230 by replacing the updated data in the cradle 230 by the data updated again.

In the first embodiment, an example in which the PDA 210 and the PC 220 accomplish data synchronism with each other using the cradle 230 has been shown. However, the present invention is not limited thereto but can be applied to an example in which data synchronism is accomplished among an arbitrary number of PDA's. In a second embodiment, therefore, a data synchronization system which accomplishes data synchronism among an arbitrary number of PDA's using a cradle 230 will be explained.

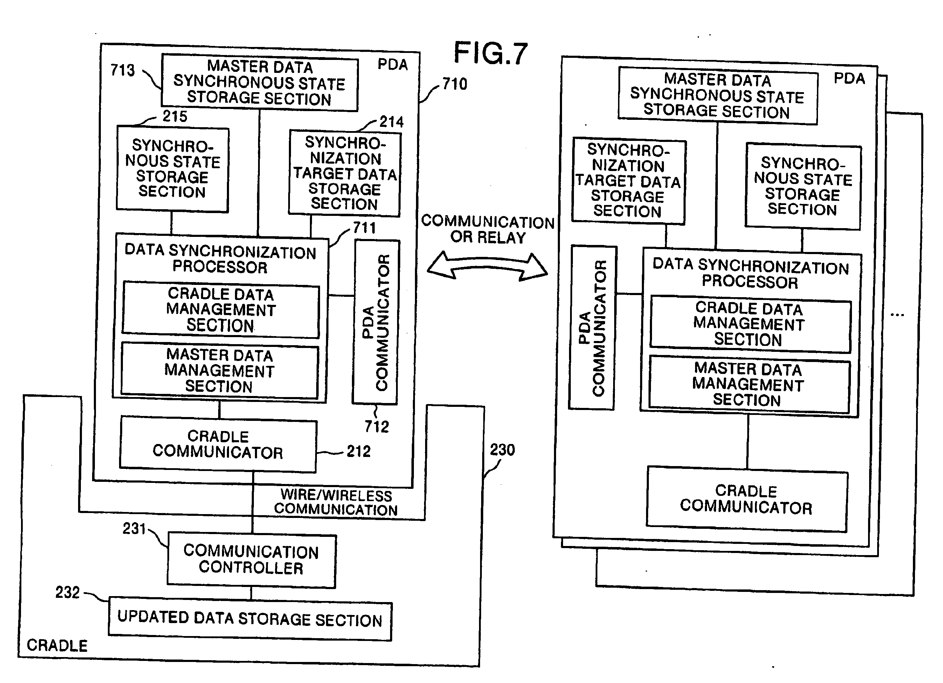

Fig. 7 is a block diagram which shows the system configuration of the data synchronization system according to the second embodiment. As shown in the figure, this data synchronization system consists of an arbitrary number of PDA's 710 and one cradle 230. If each PDA 710 cannot communicate with the other PDA's 710, the PDA 710 accomplishes data synchronism through the cradle 230.

However, to avoid a data conflict, a master PDA which manages each synchronization target data is determined for the synchronization target data. Only this master PDA can resolve the conflict state of synchronization target data. For the convenience of explanation, functional sections which act similarly to those shown in Fig. 1 are denoted by the same reference symbols, respectively and will not be explained herein in detail.

The PDA 710 is a portable terminal apparatus which needs to accomplish data synchronism with the other PDA 710. The PDA 710 includes a data synchronization processor 711, a cradle communicator 212, a PDA communicator 712, a synchronization target data storage section 214, a synchronous state storage section 215, and a master data synchronous state storage section 713.

The data synchronization processor 711 is a processor which accomplishes data synchronism with the other PDA 710. If communication is possible with the other PDA 710, the data synchronization processor 711 directly communicates with the other PDA 710 to accomplish data synchronism. If communication is not possible with the other PDA 710, the data synchronization processor 711 transmits synchronization target data updated by its own PDA 710 to the cradle 230 through the cradle communicator 212, receives synchronization target data updated by the other PDA 710 from the cradle 230 and updates the corresponding synchronization target data in its own PDA 710 . In addition, this data synchronization processor 711 manages the synchronous states of synchronization target data including those of the updated data in the cradle 230 using the synchronous state storage section 215.

If communication is possible with the other PDA 710, this data synchronization processor 711 directly synchronizes data with the other PDA 710, and determines whether the synchronization target data in its own PDA which is the master PDA has been synchronized with data in all the PDA's 710 using the master data synchronous state storage section 713. If the synchronization target data has been synchronized, the data synchronization processor 711 deletes the updated data stored inthe cradle 230. Further, the PDA communicator 712 is a processor which allows the PDA's 710 to directly hold communication with each other for data synchronism.

The master data synchronous state storage section 713 is a storage section which stores the synchronous states of synchronization target data in its own PDA 710 which is the master PDA and those of synchronization target data in the other PDA's 710. The synchronous states include "unprocessed" and "completed" states. If the synchronization target data in its own PDA 710, which is the master PDA, is updated and the synchronization target data in a certain PDA 710 is not updated, the synchronous state of the synchronization target data for the PDA 710 is in an "unprocessed" state.

If the synchronization target data in its own PDA 710, which is the master PDA, is updated and the synchronization target data in the PDA 710 is updated through the direct communication with the certain PDA 710 or through the cradle 230, the synchronous state of the synchronization target data for the PDA 710 is a "completed" state.

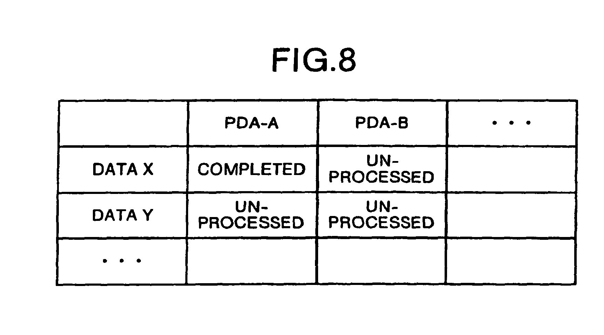

Fig. 8 shows one example of the master data synchronous state storage section 713. The figure shows that the PDA 710 which includes this master data synchronous state storage section 713 is a master PDA for data X and data Y which are synchronization target data, the synchronism of the data X is completed between the PDA 710 and a PDA-Abut not completed between the PDA 710 and a PDA-B. Fig. 8 also shows that the synchronism of the data Y is not completed either between the PDA 710 and the PDA-A or between the PDA 710 and the PDA-B.

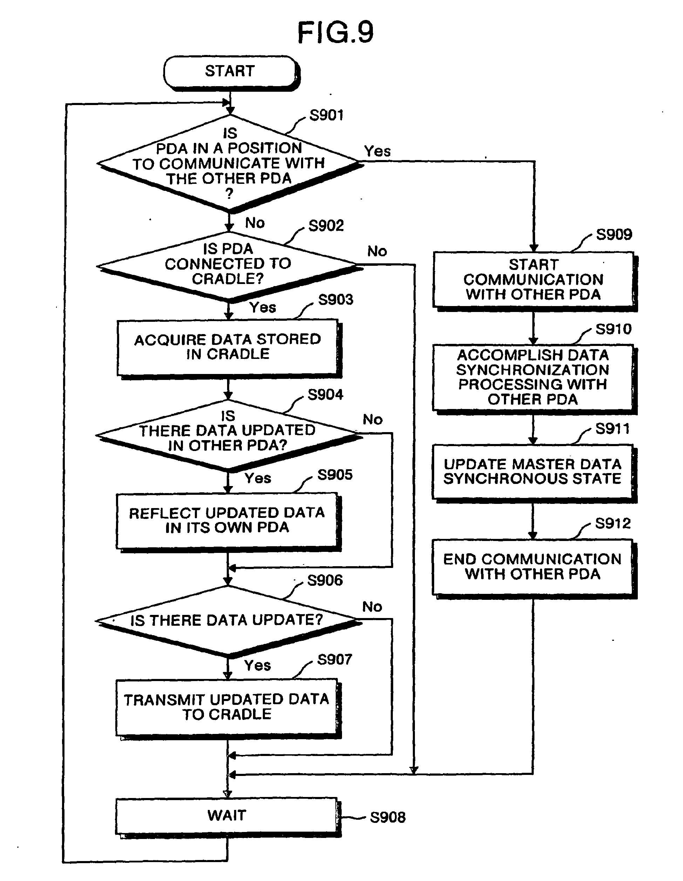

Processing procedures for the data synchronization processor 711 of the PDA 710 according to the second embodiment will next be explained. Fig. 9 is a flowchart which shows processing procedures for the data synchronization processor 711 of the PDA 710 according to the second embodiment. It is noted that this data synchronization processor 711 is activated if the PDA 710 is installed to the cradle 730 and also regularly activated at certain time intervals.

As shown in the figure, this data synchronization processor 711 of the PDA 710 first determines whether the PDA 710 is in a position to communicate with the other PDA 710 (at step 3901) . If the PDA 710 cannot communicate with the other PDA 710, the data synchronization processor 711 determines whether the PDA 710 is connected to the cradle 230 (at step S902) . If the PDA 710 is connected to the cradle 230, the data synchronization processor 711 acquires updated data from the cradle 230 (at step S903) and determines whether there is data update in the other PDA 710 (at step S904).

If there is data update in the other PDA 710, the data synchronization processor 711 updates synchronization target data in its own PDA 710 using the updated data acquired from the cradle 230 (at step S905) and newly registers this synchronization target data in the synchronous state storage section 225 in a synchronous state of "completed".

The data synchronization processor 711 refers to the synchronous state storage section 225 and determines whether there is synchronization target data, the updated data of which needs to be reflected in the other PDA 710, i.e., whether there is synchronization target data in a synchronous state of "updated" (at step S906). If there is synchronization target data, the updated data of which needs to be reflected, then the data synchronization processor 711 transmits the updated data of the synchronization target data to the cradle 230 (at step S907), changes the synchronous state of the data from "updated" to "unprocessed" and waits for the next activation (at step S908).

On the other hand, if the PDA 710 is not connected to the cradle 230 ("No" at the step S902), the data synchronization processor 711 waits for the next activation without doing anything (at the step S908) . If the PDA 710 is in a position to communicate with the other PDA 710 ("Yes" at the step S901), then the data synchronization processor 711 starts communicating with the other PDA 710 (at step S909) , directly accomplishes data synchronismwith the other PDA 710 (at step S910) and updates the synchronous state storage section 215. The data synchronization processor 711 then updates the master data synchronous state storage section 713, deletes the updated data in the cradle 230 for the synchronization target data for which a synchronous processing with all the PDA's 710 is completed (at step S911), ends communicating with the PDA 710 (at step S912) and waits for the next activation (at the step S908).

As explained so far, in the second embodiment, if the PDA's 710 that need to accomplish data synchronism cannot directly communicate with each other, then the PDA 710 which updates the synchronization target data transmits the updated data to the cradle 230, receives the updated data when the other PDA 710 can be connected to the cradle 230 and updates the synchronization target data. Therefore, even if there is a little occasion that a plurality of PDA's 710 can mutually communicate, it is possible to frequently accomplish data synchronism among them and to enhance the consistency of the synchronization target data.

As explained so far, according to the present invention, the portable terminal supporting apparatus stores up and down data. When the portable terminal supporting apparatus is electrically connected to the portable terminal apparatus, the portable terminal supporting apparatus receives the up data from the portable terminal apparatus to store the up data and transmits the down data stored to the portable terminal apparatus. Therefore, it is advantageously possible to enable accomplishing data synchronism by simple operation, to thereby increase the frequency of data synchronism and to enhance the consistency of synchronization target data.

Further, according to the present invention, the portable terminal supporting apparatus stores up and down data. When the portable terminal supporting apparatus is electrically connected to the portable terminal apparatus, the portable terminal supporting apparatus receives the up data from the portable terminal apparatus to store the up data and transmits the down data stored to the portable terminal apparatus. Therefore, it is advantageously possible to enable accomplishing data synchronism by simple operation, to thereby increase the frequency of data synchronism and to enhance the consistency of synchronization target data.

Further, according to the present invention, if the portable terminal supporting apparatus is electrically connected to the portable terminal apparatus, the portable terminal supporting apparatus receives up data, which is data to be passed from the portable terminal apparatus to the computer, from the portable terminal apparatus and transmits down data, which is data to be passed from the computer to the portable terminal apparatus, to the portable terminal apparatus. Therefore, it is advantageously possible to enable accomplishing data synchronism by simple operation, to thereby increase the frequency of data synchronism and to enhance the consistency of synchronization target data.

Further, according to the present invention, the main body apparatus of the portable terminal apparatus constituted with the main body apparatus and the supporting apparatus, receives down data, which is data to be passed from the computer to the main body apparatus, from the supporting apparatus and transmits up data, which is data to be passed from the main body apparatus to the computer, to the supporting apparatus if the main body apparatus cannot directly communicate with the computer and the main body apparatus is electrically connected to the supporting apparatus, and the supporting apparatus stores the down data and the up data, receives the up data from the main body apparatus to store the up data and transmits the down data stored to the main body apparatus. Therefore, it is advantageously possible to enable accomplishing data synchronism by simple operation, to thereby increase the frequency of data synchronism and to enhance the consistency of synchronization target data.

Further, according to the present invention, the main body apparatus of the portable terminal apparatus constituted with the main body apparatus and the supporting apparatus, receives down data, which is data to be passed from the other main body apparatus to the main body apparatus, from the supporting apparatus and transmits up data, which is data to be passed from the main body apparatus to the other main body apparatus, to the supporting apparatus if the main body apparatus cannot directly communicate with the other main body apparatus and the main body apparatus is electrically connected to the supporting apparatus, and the supporting apparatus stores the down data or the up data, and, if the supporting apparatus is electrically connected to the main body apparatus, the supporting apparatus receives the up data from the main body apparatus to store the up data and transmits the down data stored to the main body apparatus. Therefore, it is advantageously possible to enable accomplishing data synchronism by simple operation, to thereby increase the frequency of data synchronism and to enhance the consistency of synchronization target data.

Although the invention has been described with respect to a specific embodiment for a complete and clear disclosure, modifications and alternative constructions may occur to one skilled in the art which fairly fall within the scope of the appended claims.

## Claims

1. A data synchronization system comprising:
a computer,
a portable terminal apparatus used while maintaining information consistency with a computer by exchanging data with the computer; and
a portable terminal supporting apparatus which supplies power if the portable terminal supporting apparatus is electrically connected to the portable terminal apparatus, wherein
the portable terminal apparatus includes;
a synchronization target data storage unit that stores synchronization target data to be synchronized with the computer,
a synchronous state storage unit that stores the synchronous states of the synchronization target data,
a control unit that controls the portable terminal apparatus to receive down data that is data to be passed from the computer to the portable terminal apparatus from the portable terminal supporting apparatus, and to transmit up data that is extracted from the target data storage unit referring to the synchronous state storage unit and is to be passed from the portable terminal apparatus to the computer to the portable terminal supporting apparatus if the portable terminal apparatus cannot directly communicate with the computer and the portable terminal apparatus is electrically connected to the portable terminal supporting apparatus, and
the portable terminal supporting apparatus includes;
a storage unit that stores the down data and the up data; and
a control unit that controls the storage unit to receive and store the up data from the portable terminal apparatus, and to transmit the down data to the portable terminal apparatus.

2. The data synchronization system according to claim 1, wherein the control unit of the portable terminal supporting apparatus controls the reception of the down data and transmission of the up data to be performed at predetermined time intervals.

3. The data synchronisation system according to claim 1, wherein the control unit of the portable terminal supporting apparatus updates the down data or the up data stored in the storage unit if the down data or the up data is received from the computer or the portable terminal apparatus.

4. The data synchronization system according to claim 1, wherein the control unit of the portable terminal supporting apparatus transmits and receives the up data and the down data to and from the computer through wireless communication such as IrDA, Bluetooth or wireless LAN.

5. The data synchronization system according to claim 1, wherein the control unit of the portable terminal supporting apparatus transmits and receives the up data and the down data to and from the computer through wire communication such as RS232C, USB or IEEE1394.

6. A data synchronization system comprising:
a plurality of portable terminal apparatuses used while maintaining information consistency with one another by exchanging data; and
a portable terminal supporting apparatus which supplies power to at least the portable terminal apparatus if the portable terminal supporting apparatus is electrically connected to one of the other portable terminal apparatuses, wherein
the portable-terminal apparatus includes;
a synchronization target data storage unit that stores synchronization target data to be synchronized with one of the other portable terminal apparatuses,
a synchronous state storage unit that stores the synchronous states of the synchronization target data,
a control unit that controls the portable terminal apparatus to receive down data that is data to be passed from the computer to the portable terminal apparatus from the portable terminal supporting apparatus, and to transmit up data that is date extracted from the target data storage unit referring to the synchronous state storage unit and is to be passed from the portable terminal apparatus to one of the other portable terminal apparatuses to the portable terminal supporting apparatus if the main body portable terminal apparatus cannot directly communicate with the other portable terminal apparatuses and the portable terminal apparatus is electrically connected to the portable terminal supporting apparatus, and
the portable terminal supporting apparatus includes;
a storage unit that stores the down data and the up data; and
a control unit that controls the storage unit to receive and store the up data from the portable terminal apparatus, and to transmit the down data stored to the portable terminal apparatus if the portable terminal supporting apparatus is electrically connected to the portable terminal apparatus.

7. The data synchronization system according to claim 6, wherein the control unit of the portable terminal supporting apparatus updates the down data or the up data stored in the storage unit if the down data or the up data is received from the other portable terminal apparatus or the one portable terminal apparatus.

8. The data synchronization system according to claim 6, wherein the control unit of the portable terminal supporting apparatus transmits and receives the up data and the down data to and from the other portable terminal apparatus through wireless communication such as IrDA, Bluetooth or wireless LAN.

9. The data synchronization system according to claim 6, wherein the control unit of the portable terminal supporting apparatus transmits and receives the up data and the down data to and from the other portable terminal apparatus through wire communication such as RS232C, USB or IEEE1394.

10. A data synchronizing method for maintaining information consistency between a portable terminal apparatus and a computer using a portable terminal supporting apparatus which supplies power to at least the portable terminal apparatus if the portable terminal supporting apparatus is electrically connected to the portable terminal apparatus, wherein the portable terminal apparatus includes a synchronization target data storage unit that stores synchronization target data to be synchronized with the computer and a synchronous state storage unit that stores the synchronous states of the synchronization target data, the method comprising the steps of:
making the portable terminal supporting apparatus receive up data that is extracted from the target data storage unit referring to the synchronous state storage unit and is to be data to be passed from the portable terminal apparatus to computer, and transmit down data that is data to be passed from the computer to the portable terminal apparatus if the portable terminal supporting apparatus is electrically connected to the portable terminal apparatus.

11. The data synchronizing method according to claim 10, wherein the down data is received from the computer and the up data is transmitted to the computer at predetermined time intervals.

12. A data synchronizing method for maintaining information consistency between a plurality of portable terminal apparatuses by exchanging data using a portable terminal supporting apparatus which supplies power to at least the portable terminal apparatus if the portable terminal supporting apparatus is electrically connected to the portable terminal apparatus, wherein the portable terminal apparatus includes a synchronization target data storage unit that stores synchronization target data to be synchronized with one of the other portable terminal apparatuses, and a synchronous state storage unit that stores the synchronous states of the synchronization target data, the method comprising the steps of:
making the portable terminal supporting apparatus to transmit and receive down data that is data to be passed from the other portable terminal apparatus to the portable terminal apparatus, and transmit and receive up data that is extracted from the target data storage unit referring to the synchronous state storage unit and is to be data to be passed from the portable terminal apparatus to the other portable terminal apparatus, to and from the portable terminal apparatus if the portable terminal supporting apparatus is electrically connected to the portable terminal apparatus.

## Patentansprüche

1. Datensynchronisationssystem mit:
einem Computer;
einer tragbaren Endgerät-Vorrichtung, die während eines Aufrechterhaltens einer Informationsübereinstimmung mit einem Computer durch ein Austauschen von Daten mit dem Computer verwendet ist; und
einer Aufnahmevorrichtung für ein tragbares Endgerät, die Energie zuführt, wenn die Aufnahmevorrichtung für ein tragbares Endgerät mit der tragbaren Endgerät-Vorrichtung elektrisch verbunden ist, wobei
die tragbare Endgerät-Vorrichtung aufweist:
eine Synchronisations-Zieldaten-Speichereinheit, die Synchronisations-Zieldaten, die mit dem Computer zu synchronisieren sind, speichert;
eine Synchronzustands-Speichereinheit, die die Synchronzustände der Synchronisations-Zieldaten speichert; und
eine Steuereinheit, die die tragbare Endgerät-Vorrichtung steuert, um Abwärts-Daten, d. h. Daten, die von dem Computer zu der tragbaren Endgerät-Vorrichtung weiterzugeben sind, von der Aufnahmevorrichtung für ein tragbares Endgerät zu empfangen, und um Aufwärts-Daten, die aus der Zieldaten-Speichereinheit unter Bezugnahme auf die Synchronzustands-Speichereinheit extrahiert werden, und die von der tragbaren Endgerät-Vorrichtung zu dem Computer weiterzugeben sind, zu der Aufnahmevorrichtung für ein tragbares Endgerät zu senden, wenn die tragbare Endgerät-Vorrichtung mit dem Computer nicht direkt kommunizieren kann und die tragbare Endgerät-Vorrichtung mit der Aufnahmevorrichtung für ein tragbares Endgerät elektrisch verbunden ist, und
die Aufnahmevorrichtung für ein tragbares Endgerät aufweist:
eine Speichereinheit, die die Abwärts-Daten und die Aufwärts-Daten speichert; und
eine Steuereinheit, die die Speichereinheit steuert, um die Aufwärts-Daten von der tragbaren Endgerät-Vorrichtung zu empfangen und zu speichern, und um die Abwärts-Daten zu der tragbare Endgerät-Vorrichtung zu senden.

2. Datensynchronisationssystem nach Anspruch 1, bei dem die Steuereinheit der Aufnahmevorrichtung für ein tragbares Endgerät den Empfang der Abwärts-Daten und das Senden der Aufwärts-Daten steuert, damit diese in vorbestimmten Zeitintervallen durchgeführt werden.

3. Datensynchronisationssystem nach Anspruch 1, bei dem die Steuereinheit der Aufnahmevorrichtung für ein tragbares Endgerät die Abwärts-Daten oder die Aufwärts-Daten, die in der Speichereinheit gespeichert sind, aktualisiert, wenn die Abwärts-Daten oder die Aufwärts-Daten von dem Computer oder der tragbaren Endgerät-Vorrichtung empfangen werden.

4. Datensynchronisationssystem nach Anspruch 1, bei dem die Steuereinheit der Aufnahmevorrichtung für ein tragbares Endgerät die Aufwärts-Daten und die Abwärts-Daten durch eine drahtlose Kommunikation, wie IrDA, Bluetooth oder drahtloses LAN, zu dem Computer sendet und von demselben empfängt.

5. Datensynchronisationssystem nach Anspruch 1, bei dem die Steuereinheit der Aufnahmevorrichtung für ein tragbares Endgerät die Aufwärts-Daten und die Abwärts-Daten durch eine drahtgebundene Kommunikation, wie RS232C, USB oder IEEE1394, zu dem Computer sendet und von demselben empfängt.

6. Datensynchronisationssystem mit:
einer Mehrzahl von tragbaren Endgerät-Vorrichtungen, die während eines Aufrechterhaltens einer Informationsübereinstimmung miteinander durch ein Austauschen von Daten verwendet sind; und
einer Aufnahmevorrichtung für ein tragbares Endgerät, die Energie zu mindestens der tragbaren Endgerät-Vorrichtung zuführt, wenn die Aufnahmevorrichtung für ein tragbares Endgerät mit einer der anderen tragbaren Endgerät-Vorrichtungen elektrisch verbunden ist, wobei
die tragbare Endgerät-Vorrichtung aufweist:
eine Synchronisations-Zieldaten-Speichereinheit, die Synchronisations-Zieldaten, die mit einer der anderen tragbaren Endgerät-Vorrichtungen zu synchronisieren sind, speichert;
eine Synchronzustands-Speichereinheit, die die Synchronzustände der Synchronisations-Zieldaten speichert; und
eine Steuereinheit, die die tragbare Endgerät-Vorrichtung steuert, um Abwärts-Daten, d. h. Daten, die von dem Computer zu der tragbaren Endgerät-Vorrichtung weitergegeben werden, von der Aufnahmevorrichtung für ein tragbares Endgerät zu empfangen, und um Aufwärts-Daten, die aus der Zieldaten-Speichereinheit unter Bezugnahme auf die Synchronzustands-Speichereinheit extrahiert werden, und die von der tragbaren Endgerät-Vorrichtung zu einer der anderen tragbaren Endgerät-Vorrichtungen weiterzugeben sind, zu der Aufnahmevorrichtung für ein tragbares Endgerät zu senden, wenn die tragbare Endgerät-Vorrichtung mit den anderen tragbaren Endgerät-Vorrichtungen nicht direkt kommunizieren kann und die tragbare Endgerät-Vorrichtung mit der Aufnahmevorrichtung für ein tragbares Endgerät elektrisch verbunden ist, und
die Aufnahmevorrichtung für ein tragbares Endgerät aufweist:
eine Speichereinheit, die die Abwärts-Daten und die Aufwärts-Daten speichert; und
eine Steuereinheit, die die Speichereinheit steuert, um die Aufwärts-Daten von der tragbaren Endgerät-Vorrichtung zu empfangen und zu speichern, und um die Abwärts-Daten, die gespeichert sind, zu der tragbaren Endgerät-Vorrichtung zu senden, wenn die Aufnahmevorrichtung für ein tragbares Endgerät mit der tragbaren Endgerät-Vorrichtung elektrisch verbunden ist.

7. Datensynchronisationssystem nach Anspruch 6, bei dem die Steuereinheit der Aufnahmevorrichtung für ein tragbares Endgerät die Abwärts-Daten oder die Aufwärts-Daten, die in der Speichereinheit gespeichert sind, aktualisiert, wenn die Abwärts-Daten oder die Aufwärts-Daten von der anderen tragbaren Endgerät-Vorrichtung oder der einen tragbaren Endgerät-Vorrichtung empfangen werden.

8. Datensynchronisationssystem nach Anspruch 6, bei dem die Steuereinheit der Aufnahmevorrichtung für ein tragbares Endgerät die Aufwärts-Daten und die Abwärts-Daten durch eine drahtlose Kommunikation, wie IrDA, Bluetooth oder drahtloses LAN, zu der anderen tragbaren Endgerät-Vorrichtung sendet und von derselben empfängt.

9. Datensynchronisationssystem nach Anspruch 6, bei dem die Steuereinheit der Aufnahmevorrichtung für ein tragbares Endgerät die Aufwärts-Daten und die Abwärts-Daten durch eine drahtgebundene Kommunikation, wie RS232C, USB oder IEEE1394, zu der anderen tragbaren Endgerät-Vorrichtung sendet und von derselben empfängt.

10. Datensynchronisationsverfahren zum Aufrechterhalten einer Informationsübereinstimmung zwischen einer tragbaren Endgerät-Vorrichtung und einem Computer unter Verwendung einer Aufnahmevorrichtung für ein tragbares Endgerät, die Energie zu mindestens der tragbaren Endgerät-Vorrichtung zuführt, wenn die Aufnahmevorrichtung für ein tragbares Endgerät mit der tragbaren Endgerät-Vorrichtung elektrisch verbunden ist, wobei die tragbare Endgerät-Vorrichtung eine Synchronisations-Zieldaten-Speichereinheit, die Synchronisations-Zieldaten, die mit dem Computer zu synchronisieren sind, speichert, und eine Synchronzustands-Speichereinheit, die die Synchronzustände der Synchronisations-Zieldaten speichert, umfasst, wobei das Verfahren folgende Schritte aufweist:
Veranlassen, dass die Aufnahmevorrichtung für ein tragbares Endgerät Aufwärts-Daten, die aus der Zieldaten-Speichereinheit unter Bezugnahme auf die Synchronzustands-Speichereinheit extrahiert werden, und die Daten sein sollen, die von der tragbaren Endgerät-Vorrichtung zu dem Computer weiterzugeben sind, empfängt, und Abwärts-Daten, d. h. Daten, die von dem Computer zu der tragbare Endgerät-Vorrichtung weiterzugeben sind, sendet, wenn die Aufnahmevorrichtung für ein tragbares Endgerät mit der tragbaren Endgerät-Vorrichtung elektrisch verbunden ist.

11. Datensynchronisationsverfahren nach Anspruch 10, bei dem in vorbestimmten Zeitintervallen die Abwärts-Daten von dem Computer empfangen werden und die Aufwärts-Daten zu dem Computer gesendet werden.

12. Datensynchronisationsverfahren zum Aufrechterhalten einer Informationsübereinstimmung zwischen einer Mehrzahl von tragbaren Endgerät-Vorrichtungen durch ein Austauschen von Daten unter Verwendung einer Aufnahmevorrichtung für ein tragbares Endgerät, die Energie zu mindestens der tragbaren Endgerät-Vorrichtung zuführt, wenn die Aufnahmevorrichtung für ein tragbares Endgerät mit der tragbaren Endgerät-Vorrichtung elektrisch verbunden ist, wobei die tragbare Endgerät-Vorrichtung eine Synchronisations-Zieldaten-Speichereinheit, die Synchronisations-Zieldaten, die mit einer der anderen tragbaren Endgerät-Vorrichtungen zu synchronisieren sind, speichert, und eine Synchronzustands-Speichereinheit, die die Synchronzustände der Synchronisations-Zieldaten speichert, umfasst, wobei das Verfahren folgende Schritte aufweist:
Veranlassen, dass die tragbare Endgerät-Vorrichtung Abwärts-Daten, d. h. Daten, die von der anderen tragbaren Endgerät-Vorrichtung zu der tragbaren Endgerät-Vorrichtung weiterzugeben sind, sendet und empfängt, und Aufwärts-Daten, die aus der Zieldaten-Speichereinheit unter Bezugnahme auf die Synchronzustands-Speichereinheit extrahiert werden, und die Daten sein sollen, die von der tragbaren Endgerät-Vorrichtung zu der anderen tragbaren Endgerät-Vorrichtung weiterzugeben sind, sendet und empfängt, zu und von der tragbaren Endgerät-Vorrichtung, wenn die Aufnahmevorrichtung für ein tragbares Endgerät mit der tragbaren Endgerät-Vorrichtung elektrisch verbunden ist.

## Revendications

1. Système de synchronisation de données comprenant :
un ordinateur,
un appareil terminal portable utilisé tout en maintenant une cohérence d'informations avec un ordinateur en échangeant des données avec l'ordinateur ; et
un appareil de support terminal portable qui sert d'alimentation si l'appareil de support terminal portable est électriquement connecté à l'appareil terminal portable, dans lequel
l'appareil terminal portable inclut :
une unité de stockage de données cibles de synchronisation qui stocke des données cibles de synchronisation à synchroniser avec l'ordinateur,
une unité de stockage d'état synchrone qui stocke les états synchrones des données cibles de synchronisation,
une unité de commande qui commande l'appareil terminal portable pour recevoir des données descendantes qui sont des données à faire passer de l'ordinateur à l'appareil terminal portable depuis l'appareil de support terminal portable, et pour transmettre des données ascendantes qui sont extraites de l'unité de stockage de données cibles se rapportant à l'unité de stockage d'état synchrone et sont à faire passer de l'appareil terminal portable vers l'ordinateur jusqu'à l'appareil de support terminal portable si l'appareil terminal portable ne peut pas communiquer directement avec l'ordinateur et l'appareil terminal portable est électriquement connecté à l'appareil de support terminal portable, et l'appareil de support terminal portable inclut :
une unité de stockage qui stocke les données descendantes et les données ascendantes ; et
une unité de commande qui commande l'unité de stockage pour recevoir et stocker les données ascendantes provenant de l'appareil terminal portable, et pour transmettre les données descendantes à l'appareil terminal portable.

2. Système de synchronisation de données selon la revendication 1, dans lequel l'unité de commande de l'appareil de support terminal portable commande la réception des données descendantes et la transmission des données ascendantes à réaliser à des intervalles de temps prédéterminés.

3. Système de synchronisation de données selon la revendication 1, dans lequel l'unité de commande de l'appareil de support terminal portable met à jour les données descendantes ou les données ascendantes stockées dans l'unité de stockage si les données descendantes ou les données ascendantes sont reçues en provenance de l'ordinateur ou de l'appareil terminal portable.

4. Système de synchronisation de données selon la revendication 1, dans lequel l'unité de commande de l'appareil de support terminal portable transmet et reçoit les données ascendantes et les données descendantes à et en provenance de l'ordinateur par l'intermédiaire d'une communication sans fil telle que IrDA, Bluetooth ou LAN sans fil.

5. Système de synchronisation de données selon la revendication 1, dans lequel l'unité de commande de l'appareil de support terminal portable transmet et reçoit les données ascendantes et les données descendantes à et en provenance de l'ordinateur par l'intermédiaire d'une communication câblée telle que RS232C, USB ou IEEE1394.

6. Système de synchronisation de données comprenant :
une pluralité d'appareils terminaux portables utilisés tout en maintenant une cohérence d'informations les uns avec les autres en échangeant des données ; et
un appareil de support terminal portable qui sert d'alimentation à au moins l'appareil terminal portable si l'appareil de support terminal portable est électriquement connecté à l'un des autres appareils terminaux portables, dans lequel
l'appareil terminal portable inclut :
une unité de stockage de données cibles de synchronisation qui stocke des données cibles de synchronisation à synchroniser avec l'un des autres appareils terminaux portables,
une unité de stockage d'état synchrone qui stocke les états synchrones des données cibles de synchronisation,
une unité de commande qui commande l'appareil terminal portable pour recevoir des données descendantes qui sont des données à faire passer de l'ordinateur à l'appareil terminal portable depuis l'appareil de support terminal portable, et pour transmettre des données ascendantes qui sont extraites de l'unité de stockage de données cibles se rapportant à l'unité de stockage d'état synchrone et sont à faire passer de l'appareil terminal portable vers l'ordinateur jusqu'à l'appareil de support terminal portable si l'appareil terminal portable ne peut pas communiquer directement avec les autres appareils terminaux portables et l'appareil terminal portable est électriquement connecté à l'appareil de support terminal portable, et
l'appareil de support terminal portable inclut :
une unité de stockage qui stocke les données descendantes et les données ascendantes ; et
une unité de commande qui commande l'unité de stockage pour recevoir et stocker les données ascendantes provenant de l'appareil terminal portable, et pour transmettre les données descendantes stockées à l'appareil terminal portable si l'appareil de support terminal portable est électriquement connecté à l'appareil terminal portable.

7. Système de synchronisation de données selon la revendication 6, dans lequel l'unité de commande de l'appareil de support terminal portable met à jour les données descendantes ou les données ascendantes stockées dans l'unité de stockage si les données descendantes ou les données ascendantes sont reçues en provenance de l'autre appareil terminal portable ou de l'appareil terminal portable.

8. Système de synchronisation de données selon la revendication 6, dans lequel l'unité de commande de l'appareil de support terminal portable transmet et reçoit les données ascendantes et les données descendantes à et en provenance de l'autre appareil terminal portable par l'intermédiaire d'une communication sans fil telle que IrDA, Bluetooth ou LAN sans fil.

9. Système de synchronisation de données selon la revendication 6, dans lequel l'unité de commande de l'appareil de support terminal portable transmet et reçoit les données ascendantes et les données descendantes à et en provenance de l'autre appareil terminal portable par l'intermédiaire d'une communication câblée telle que RS232C, USB ou IEEE1394.

10. Procédé de synchronisation de données destiné à maintenir une cohérence d'informations entre un appareil terminal portable et un ordinateur utilisant un appareil de support terminal portable qui sert d'alimentation à au moins l'appareil terminal portable si l'appareil de support terminal portable est électriquement connecté à l'appareil terminal portable, dans lequel l'appareil terminal portable inclut une unité de stockage de données cibles de synchronisation qui stocke des données cibles de synchronisation à synchroniser avec l'ordinateur, et une unité de stockage d'état synchrone qui stocke les états synchrones des données cibles de synchronisation, le procédé comprenant les étapes consistant à : faire en sorte que l'appareil de support terminal portable reçoive les données ascendantes qui sont extraites de l'unité de stockage de données cibles se rapportant à l'unité de stockage d'état synchrone et qui doivent être des données à faire passer de l'appareil terminal portable à l'ordinateur, et transmette les données descendantes qui sont des données à faire passer de l'ordinateur à l'appareil terminal portable si l'appareil de support terminal portable est électriquement connecté à l'appareil terminal portable.

11. Procédé de synchronisation de données selon la revendication 10, dans lequel les données descendantes sont reçues en provenance de l'ordinateur et les données ascendantes sont transmises à l'ordinateur à des intervalles de temps prédéterminés.

12. Procédé de synchronisation de données destiné à maintenir une cohérence d'informations entre une pluralité d'appareils terminaux portables en échangeant des données en utilisant un appareil de support terminal portable qui sert d'alimentation à au moins l'appareil terminal portable si l'appareil de support terminal portable est électriquement connecté à l'appareil terminal portable, dans lequel l'appareil terminal portable inclut une unité de stockage de données cibles de synchronisation qui stocke des données cibles de synchronisation à synchroniser avec l'un des autres appareils terminaux portables, et une unité de stockage d'état synchrone qui stocke les états synchrones des données cibles de synchronisation, le procédé comprenant les étapes consistant à :
faire en sorte que l'appareil de support terminal portable transmette et reçoive les données descendantes qui sont des données à faire passer de l'autre appareil terminal portable à l'appareil terminal portable, et transmette et reçoive les données ascendantes qui sont extraites de l'unité de stockage de données cibles se rapportant à l'unité de stockage d'état synchrone et doivent être des données à faire passer de l'appareil terminal portable à l'autre appareil terminal portable, à et en provenance de l'appareil terminal portable si l'appareil de support terminal portable est électriquement connecté à l'appareil terminal portable.
